# EUROPÄISCHE PATENTSCHRIFT

(11) **EP 2 709 843 B1**
(45) Veröffentlichungstag und Bekanntmachung des Hinweises auf die Patenterteilung: **19.04.2017**
(21) Anmeldenummer: 11723377.5
(22) Anmeldetag: 18.05.2011
(51) Int. Cl.: B32B 27/08, B32B 27/18, B32B 27/20, B32B 27/30, B32B 27/36

(54) **MEHRSCHICHTVERBUNDE MIT VERBESSERTEN PHYSIKALISCHEN EIGENSCHAFTEN**
MULTILAYER COMPOSITES HAVING IMPROVED PHYSICAL PROPERTIES
COMPOSITES MULTICOUCHES À PROPRIÉTÉS PHYSIQUES AMÉLIORÉES

(43) Veröffentlichungstag der Anmeldung: 26.03.2014
(73) Patentinhaber: Senoplast Klepsch & Co. GmbH, 5721 Piesendorf (AT)
(72) Erfinder: KAPPACHER, Johann, A-5721 Piesendorf (AT); KLEPSCH, Wilhelm, A-5710 Kaprun (AT); SCHETT, Christoph, A-5700 Zell am See (AT)
(74) Vertreter: Schwarz & Partner Patentanwälte OG
(86) Internationale Anmeldenummer: PCT/EP2011/058025
(87) Internationale Veröffentlichungsnummer: WO 2012/155966

(56) Entgegenhaltungen:
- EP-A2- 0 847 852
- EP-B1- 1 761 382
- WO-A1-02/40576
- DE-A1- 10 351 535
- DE-A1- 19 651 350
- DE-A1- 19 725 560

## Beschreibung

Die Erfindung betrifft einen flächigen colorierten mehrschichtigen Verbundkörper mit einer Gesamtdicke größer als 1 mm mit verbesserten physikalischen Eigenschaften. Die Erfindung betrifft weiters Verfahren zu dessen Herstellung, die Verwendung solcher Mehrschichtverbunde als Formkörper und die Anwendung dieser Formkörper.

Die Verwendung von flächigen Verbundkörpern im Außeneinsatz stellt hohe Anforderungen an die verwendeten Werkstoffe. Die wichtigsten Parameter sind:
- Hohe Wärmeformbeständigkeit,
- hohe UV- und Witterungsstabilität,
- hohe Kratzfestigkeit,
- hohe Anforderungen an die mechanischen Eigenschaften und
- hohe Beständigkeit gegen Chemikalien.

Von Vorteil sind weiters Materialien, die eingefärbt sind, dies auch mit Effektpigmenten, da die Lackierung von Bauteilen aufwendig und kostenintensiv ist.

Mehrschichtige Bauteile für den Außeneinsatz sind aus der Literatur bekannt. So beschreibt H. Kappacher in Kunststoffe 86 (1996), S. 388 bis 392 coextrudierte PMMA/ABS-Verbundplatten. Vergleichbare Aufbauten werden auch in der EP 1 761 382 B1 beschrieben. Um die Anforderungen in Richtung verbesserter Wärmeformbeständigkeit besser zu erfüllen, werden in dem zuvor genannten Artikel von H. Kappacher auch Aufbauten mit einem Träger aus ABS/PC-Blend (Acrylnitril/Butadien/Styrolcopolymer-Polycarbonat-Blend) erwähnt. Mit dieser Materialkombination wird eine Verbesserung in der Wärmeformbeständigkeit erreicht.

Coextrudierte Mehrschichtverbunde beschreibt auch die DE 103 51 535 A1. Die darin definierten Deckschichten aus speziellen Polymethylmethacrylatcopolymeren zeigen im Blend mit Polycarbonat gute Mischbarkeit. Dies wird nachgewiesen durch einen maximalen Abfall der Bruchdehnung um 25 % bei einem Mengenverhältnis von 20 % Polymethylmethacrylatcopolymeren und 80 % Polycarbonat. Durch die Verwendung dieses Polymethylmethacrylatcopolymers auch in der zweiten Schicht und des optionalen Zusatzes dieses Polymers in die Trägerschicht aus Polycarbonat sollen die Anforderungen hinsichtlich verbesserter Wärmeformbeständigkeit erreicht werden.

Die EP 0 361 823 B1 beschreibt Folien, welche auf fluorhältigen Polymeren basieren und auch Acrylnitril/Butadien/Styrolcopolymeren (ABS) enthalten.

Die DE 197 25 560 A1 beschreibt Mehrschichtkörper, aufweisend eine Polymethylmethacrylat (PMMA) Deckschicht und eine darunter liegende Substratschicht, gegebenenfalls eine Zwischenschicht. Die Substratschicht besteht aus einer Polymerlegierung definierter Zusammensetzung. Die optionale Zwischenschicht setzt sich zusammen aus: PMMA, PC oder einer Formmasse, in der Zusammensetzung analog der in der Substratschicht definierten Polymerlegierung. Es wird beschrieben, dass erfindungsgemäße Aufbauten eine gegenüber ABS-Verbunden verbesserte Wärmeformbeständigkeit zeigen.

### Aufgabenstellung und Lösung

Der Stand der Technik stellt keine Mehrschichtverbunde bereit, bei denen alle der eingangs genannten Parameter in ausreichendem Maße erfüllt werden. Aufgabenstellung der vorliegenden Erfindung war es daher, einen Mehrschichtverbund zu entwickeln, welcher als freitragender, nicht zusätzlich verstärkter, dreidimensionaler Bauteil Langzeittemperatureinwirkungen von 110° C standhält, ohne dabei wesentlich seine geometrische Form zu verlieren und zusätzlich folgende Eigenschaften aufweist:
1. Colorierung in uni und/oder Effekteinfärbung, um Lackierung zu vermeiden,
2. gute Chemikalienbeständigkeit und Kratzfestigkeit der Oberfläche,
3. hohe Oberflächengüte,
4. gute mechanische Eigenschaften des Verbundes,
5. Tiefziehfähigkeit (thermische Duktilität), und
6. ausgezeichnete UV-Beständigkeit.

Diese Aufgabe wird durch einen mehrschichtigen, coextrudierten Verbundkörper gelöst, der den folgenden Schichtaufbau aufweist:
(i) Eine Deckschicht (1) mit einer Schichtstärke von 5 - 50 µm, umfassend PMMA, impact-modifiziertes PMMA (HI-PMMA) oder einen Blend davon,
(ii) eine unterhalb der Deckschicht (1) angeordnete Zwischenschicht (2), umfassend Polycarbonat (PC), welches bei einer Schichtstärke von 3 mm über den gesamten Wellenlängenbereich vom 380 nm bis 780 nm eine spektrale Transmission von mindestens 80 %, vorzugsweise mindestens 85 %, gemessen an ungefärbten Probekörpern nach ISO 13468-2 (Ausgabestand 1999) aufweist, und gegenüber dem PMMA, impact-modifizierten PMMA (HI-PMMA) oder Blend davon der Deckschicht (1) eine um wenigstens 30° C höhere Glasübergangstemperatur, definiert durch die jeweilige "midpoint temperature" gemessen mittels DSC-Methode nach ISO 11357-2 (Ausgabestand 1999-3), aufweist,
(iii) eine Substratschicht (3), umfassend mindestens 85 Gew. % Polycarbonat (PC), besonders bevorzugt mindestens 95 Gew. % PC, welcher gegenüber dem PMMA, impact-modifizierten PMMA (HI-PMMA) oder Blend davon aus der Deckschicht (1) eine um wenigstens 30° C höhere Glasübergangstemperatur, definiert durch die jeweilige "midpoint temperature" gemessen mittels DSC-Methode nach ISO 11357-2 (Ausgabestand 1999-3), aufweist, zusätzlich enthaltend Pigmente, Farbstoffe und gegebenenfalls Effektpigmente,
(iv) optional eine vierte Schicht (4), umfassend einen Werkstoff wie in der Zwischenschicht (2) oder der Substratschicht (3) beschrieben oder einen Blend von Acrylnitril-Butadien-Styrolcopolymer (ABS) mit einem Werkstoff wie in der Zwischenschicht (2) oder der Substratschicht (3) beschrieben,
   mit der Maßgabe, dass die Gesamtdicke des Verbundkörpers größer als 1,0 mm ist.

Die Erfinder haben herausgefunden, dass derartige mehrschichtige, coextrudierte Verbundkörper sowohl thermische, optische als auch mechanische, physikalische und physikalisch-chemische Eigenschaften in sich vereinen, welche den oben genannten Kriterien entsprechen, und die einer Langzeittemperatureinwirkung von 110° C standhalten.

Bevorzugte Ausgestaltungen werden nachfolgend beschrieben.

### Deckschicht (1)

Die Deckschicht (1) umfasst ein Acrylpolymer, nämlich PMMA, impact modifiziertes PMMA (HI-PMMA) oder ein Blend daraus. Optional kann die Deckschicht (1) UV-Absorber und UV-Stabilisatoren aufweisen, um eine höhere UV-Beständigkeit der Oberfläche und des Verbunds zu erzielen. Bevorzugt weist die Deckschicht (1) wenigstens 95 Gew. % an PMMA, HI-PMMA oder einem Blend daraus, auf. Besonders bevorzugt weist die Deckschicht (1) außer dem Acrylpolymer und gegebenenfalls UV-Absorbern und UV-Stabilisatoren keine weiteren Bestandteile auf. Die wichtigsten Eigenschaften von PMMA sind in Hans Domininghaus, "Die Kunststoffe und ihre Eigenschaften", Ausgabe 1998, S 455 - 481 zusammengefasst. Aufgrund der beschriebenen Eigenschaften eignet sich PMMA als Deckschichtmaterial in besonderem Maße für Außenanwendungen, da es von sich aus bereits sehr UV-stabil und kratzfest ist, eine sehr gute Chemikalienbeständigkeit zeigt und transparent ist. Es weist allerdings gegenüber anderen Thermoplasten den Nachteil auf, dass es sprödes mechanisches Verhalten zeigt. Ein weiterer Nachteil liegt in der geringen Wärmeformbeständigkeit: Schon bei relativ niedrigen Temperaturen wird PMMA plastisch. Es wird daher in dem erfindungsgemäßen Aufbau nur in einer sehr dünnen Schicht eingesetzt. Durch Verwendung von UV-Schutzmittel (UV-Absorber und UV-Stabilisatoren) im Ausmaß von 0,01 bis 5 Gew. % werden die in der Zwischenschicht (2) eingesetzten Werkstoffe und Farbmittel vor UV-Einstrahlung zusätzlich geschützt, wodurch sich sowohl das mechanische Verhalten als auch die Farbstabilität über die Verwendungsdauer bei Bestrahlung mit UV-Licht deutlich verbessert. Damit die Zwischenschicht (2) unterhalb der Deckschicht (1) gut erkennbar bleibt, weist das Acrylpolymer der Deckschicht (1) (PMMA, HI-PMMA oder der Blend daraus) eine spektrale Transmission im gesamten sichtbaren Wellenlängenbereich von 380 nm bis 780 nm von mindestens 80 %, vorzugsweise wenigstens 85 %, besonders bevorzugt wenigstens 90 %, gemessen an Probekörpern nach ISO 13468-2 bei einer Schichtstärke von 3 mm auf. Der für das menschliche Auge sichtbare Lichtbereich liegt etwa im Band von 380 nm bis 780 nm. Bevorzugt ist vorgesehen, dass die Deckschicht (1) ausschließlich aus PMMA, HI-PMMA und gegebenenfalls UV-Absorbern und/oder UV-Stabilisatoren besteht.

### Zwischenschicht (2)

Die Zwischenschicht (2) umfasst den thermoplastischen Werkstoff Polycarbonat, welches die nachfolgend beschriebenen Anforderungen erfüllt. Als thermoplastischer Werkstoff wird im Rahmen der Erfindung ein Kunststoff verstanden, der sich in einem bestimmten Temperaturbereich thermoplastisch verformen lässt. Die thermoplastische Verformbarkeit ist ein reversibler Vorgang, sodass der thermoplastische Werkstoff durch Abkühlen und Aufwärmen bis in den verformbaren Zustand beliebig oft wiederholt werden kann. Unter thermoplastischen Werkstoffen werden reine Kunststoffe (Homopolymere, Hetereo- bzw. Copolymere) und Kunststoffblends (Mischungen verschiedener Kunststoffe) zusammengefasst.

### Transmission:

Im sichtbaren Lichtbereich (380 nm bis 780 nm) beträgt die spektrale Transmission des thermoplastischen Werkstoffs mindestens 80 % (bevorzugt von mindestens 85 %) gemessen an farblosen Probekörpern nach ISO 13468-2 (Ausgabestand: 1999) bei einer Schichtstärke von 3 mm. Selbstverständlich kann der thermoplastische Werkstoff auch ein Blend an Kunststoffen sein. Im Falle, dass der thermoplastische Werkstoff ein Kunststoffblend ist, sollte dieser Kunststoffblend bei einer Schichtstärke von 3 mm im gesamten Wellenlängenbereich von 380 nm bis 780 nm eine spektrale Transmission von mindestens 80 % gemessen an Probekörpern nach ISO 13468-2 (Ausgabenstand 1999) zeigen.

Die hohe Transparenz ist erforderlich, um die in der Anwendung der Bauteile aus diesem Halbzeug geforderten Effekteinfärbungen - insbesondere in der Substratschicht (3) - zu ermöglichen. Die optische Wirkung dieser Effektpigmente beruht auf der Ausrichtung der Plättchen parallel zur Oberfläche des umgebenden Systems, wodurch bei Lichteinstrahlung an deren Oberfläche eine gerichtete Reflexion auftritt, an den Kanten der Effektpigmente tritt gerichtete Streuung auf. Bei Verwendung von opaken Werkstoffen würden werkstoffbedingte zusätzliche Streuungs- und Absorptionseffekte auftreten, wodurch der Effekt stark an Brillanz verliert bzw. überhaupt verloren geht.

### Glasübergangs- oder Erweichungstemperatur (T_{G}):

Die Glasübergangs- oder Erweichungstemperatur *T_{G}* ist jene Temperatur, bei der ein Kunststoff die größte Änderung der Verformungsfähigkeit aufweist. Dieser sogenannte Glasübergang trennt den unterhalb liegenden spröden energieelastischen Bereich (=Glasbereich) vom oberhalb liegenden weichen entropieelastischen Bereich (=gummielastischer Bereich). Die Erweichungstemperatur wird gemessen mittels eines DSC-Messgerätes nach ISO 11357-2:1999 und ist charakterisiert durch die "midpoint temperature". Um die Anforderungen der Wärmestandfestigkeit zu erfüllen, ergibt sich die Erfordernis an den thermoplastischen Werkstoff, dass dieser gegenüber dem Acrylpolymer - vorzugsweise PMMA, HI-PMMA oder einem Blend daraus - aus der Deckschicht (1) eine um wenigstens 30°C höhere Glasübergangstemperatur, gemessen mittels DSC-Methode nach ISO 11357-2 (Ausgabestand 1999-3), aufweist. Untersuchungen der Erfinder haben gezeigt, dass nur Verbundkörper, die in der Zwischenschicht (2) aus solchen Werkstoffen gefertigt werden, die Anforderung hinsichtlich mehrstündiger Lagerung bei 110° C ohne geometrische Deformation erfüllen. Selbstverständlich kann der thermoplastische Werkstoff auch ein Blend an Kunststoffen sein bzw. kann es erforderlich sein, zusätzlich Stoffe zuzusetzen, um gewünschte Eigenschaften zu erzielen. Im Falle, dass der thermoplastische Werkstoff ein Kunststoffblend ist, sollten zumindest 85 Gew. %, vorzugsweise mindestens 90 Gew. % der Zwischenschicht (der thermoplastische Werkstoff) gegenüber dem Acrylpolymer der Deckschicht (1) eine um wenigstens 30° C höhere Glasübergangstemperatur, definiert durch die jeweilige "midpoint temperature" von mindestens 30° C gemessen mittels DSC-Methode nach ISO 11357-2 (Ausgabestand 1999-3), aufweisen.

Der Zwischenschicht (2) können optional zusätzlich UV-Absorber, UV-Stabilisatoren sowie Pigmente, Farbstoffe und/oder Effektpigmente zugesetzt sein. In einer bevorzugten Ausführungsvariante der Erfindung ist vorgesehen, dass die Zwischenschicht (2) neben den optionalen UV-Absorbern, UV-Stabilisatoren sowie Pigmenten, Farbstoffen und/oder Effektpigmenten lediglich den thermoplastischen Werkstoff, welcher bei einer Schichtstärke von 3 mm im gesamten Wellenlängenbereich von 380 nm bis 780 nm eine spektrale Transmission von mindestens 80 %, gemessen an Probekörpern nach ISO 13468-2 (Ausgabenstand 1999) zeigt, und welcher gegenüber dem Acrylpolymer der Deckschicht (1) eine Differenztemperatur im Glasübergangspunkt definiert durch die jeweilige "midpoint temperature" von mehr als 30° C, gemessen mittels DSC-Methode nach ISO 11357-2 (Ausgabestand 1999-3) aufweist, umfasst.

### Substratschicht (3)

Die Substratschicht stellt prozentuell den größten Anteil an der Gesamtschichtstärke des Verbunds dar und umfasst einen thermoplastischen Werkstoff, welcher gegenüber dem PMMA, impact-modifizierten PMMA (HI-PMMA) oder Blend davon aus der Deckschicht (1) eine um wenigstens 30° C höhere Glasübergangstemperatur, definiert durch die jeweilige "midpoint temperature" von mindestens 30° C, gemessen mittels DSC-Methode nach ISO 11357-2 (Ausgabestand 1999-3), aufweist. Weiters enthält diese Substratschicht (3) Pigmente, Farbstoffe und gegebenenfalls Effektpigmente.

Selbstverständlich kann auch ein Blend an Kunststoffen als thermoplastischer Werkstoff vorliegen bzw. kann es erforderlich sein, zusätzliche Stoffe zuzusetzen, um gewünschte Eigenschaften zu erzielen. Im Falle, dass der thermoplastische Werkstoff ein Kunststoffblend ist, gilt natürlich ebenfalls, dass zumindest 85 Gew. % (besonders bevorzugt von zumindest 90 Gew. %) der Substratschicht (3) gegenüber dem Acrylpolymer der Deckschicht (1) eine um wenigstens 30°C höhere Glasübergangstemperatur, definiert durch die jeweilige "midpoint temperature", gemessen mittels DSC-Methode nach ISO 11357-2 (Ausgabestand 1999-3), aufweisen.

Besonders bevorzugt ist vorgesehen, dass der thermoplastische Werkstoff der Substratschicht (3) im Wesentlichen identisch ist zum thermoplastischen Werkstoff der Zwischenschicht (2). Im erfindungsgemäßen Mehrschichtverbund kann die Substratschicht (3) den reinen thermoplastischen Werkstoff mit den Eigenschaften zum *T_{G}* - wie zuvor beschrieben - enthalten. Gegebenenfalls kann zusätzlich oder alternativ dazu die Substratschicht (3) Recyclat oder Regenerat der Zwischenschicht (2) oder der Substratschicht (3) (z.B. von vorangegangenen Produktionsschritten) oder deren Blends enthalten. Die Eigenschaften werden durch die Verwendung von Regeneraten, Abfällen, Recyclaten etc. nicht beeinträchtigt. In einer bevorzugten Ausführungsvariante der Erfindung ist vorgesehen, dass die Substratschicht (3) neben den Pigmenten, Farbstoffen und/oder Effektpigmenten lediglich den thermoplastischen Werkstoff, welcher bei einer Schichtstärke von 3 mm im gesamten Wellenlängenbereich von 380 nm bis 780 nm eine spektrale Transmission von mindestens 80 %, gemessen an Probekörpern nach ISO 13468-2 (Ausgabenstand 1999) zeigt, und welcher gegenüber dem Acrylpolymer der Deckschicht (1) eine Differenztemperatur im Glasübergangspunkt definiert durch die jeweilige "midpoint temperature" von mehr als 30° C, gemessen mittels DSC-Methode nach ISO 11357-2 (Ausgabestand 1999-3) aufweist, umfasst.

### Optionale vierte Schicht (4)

Weiters kann optional eine vierte Schicht (4) vorgesehen sein. Bevorzugt umfasst diese einen thermoplastischen Werkstoff mit den Eigenschaften wie in der Zwischenschicht (2) oder der Substratschicht (3) beschrieben oder einen Blend von Acrylnitril-Butadien-Styrolcopolymer (ABS) mit einem thermoplastischen Werkstoff wie in der Zwischenschicht (2) oder der Substratschicht (3). Besonders bevorzugt sind keine weiteren thermoplastischen Werkstoffe in der vierten Schicht (4) enthalten.

Besteht die vierte Schicht (4) im Wesentlichen aus dem thermoplastischen Werkstoff wie in Zwischenschicht (2) oder Substratschicht (3) beschrieben, so können der Schicht (4) Mattierungsmittel zugesetzt werden. Als Mattierungsmittel bezeichnet man im Allgemeinen Zusatzstoffe, welche die Oberfläche einer Beschichtung so beeinflussen, sodass sich ihr Glanzgrad senkt. Meist damit verbunden ist eine Erhöhung der Oberflächenrauhigkeit, welche im Folgeprozess, dem Thermoformen zu einem verbesserten Fließen der thermoplastischen Masse über der Form führt. Dadurch erreicht man eine gleichmäßige Restwandstärkenverteilung am dreidimensionalen Bauteil.

Geeignete Mattierungsmittel sind dem Fachmann bekannt und umfassen z.B. anorganische Füllstoffe, insbesondere Kieselsäure oder vernetzte Polymere in Perlenform ("Polymerperlen"), vorzugsweise Acrylatperlen. Die zugesetzte Menge beträgt vorzugsweise zwischen 0,1 Gew. % und 5 Gew. %.

Besteht die vierte Schicht (4) aus Blends von ABS mit dem Werkstoff, wie er in Zwischenschicht (2) oder Substratschicht (3) verwendet wird, kann durch die im Blend gegebene Morphologie auch eine mattierte rückseitige Deckschicht erzeugt werden, die denselben positiven Effekt auf die weitere Verarbeitung hat, wie der Zusatz eines Mattierungsmittels. Es kann daher bei diesem Aufbau normalerweise auf ein zusätzliches Mattierungsmittel verzichtet werden. Aufgrund der tiefen Glasübergangstemperatur von ABS sollte die vierte Schicht (4) sehr dünn sein. Es hat sich gezeigt, dass eine Schichtdicke der vierten Schicht von 5 - 50 µm keinen negativen Einfluss auf die Geometrie der Bauteile aus erfindungsgemäßem Aufbau bei Einwirkung einer Temperatur von 110° C über mehrere Stunden hinweg hat.

### Effektpigmente

Effektpigmente, wie in der Schicht (2) verwendet, können gemäß Literatur, Gunter Buxbaum, "Industrial Inorganic Pigments", Ausgabe 1993, Seite 207-224 in zwei große Klassen geteilt werden, die Perlglanz- und die Metalleffektpigmente. Pigmente dieser Art können verwendet werden, um spezielle visuelle Effekte zu erzielen, sie können auch in Kombination mit normalen Pigmenten und/oder Farbstoffen eingesetzt werden.

### Herstellung der Halbzeuge

Die erfindungsgemäßen mehrschichtigen Verbundkörper können in einem einstufigen Verfahren mittels Adapter- oder Düsencoextrusion hergestellt werden. Dabei werden die Werkstoffe der Schichten (1), (2), (3) und gegebenenfalls (4) in jeweils einem Extruder durch thermische Einwirkung fließfähig gemacht und in einem Adaptersystem oder einer Mehrkanaldüse zu besagtem Mehrschichtverbund zusammengeführt.

Eine weitere Möglichkeit der Herstellung bietet die Lamination. Dabei werden Folien entsprechend den Schichten (1), (2), (3) und gegebenenfalls (4) aus erfindungsgemäßem Aufbau in einem beheizten Walzenspalt gegeneinander kaschiert. Der definierte Schichtaufbau wird dabei durch Aufeinanderlegen von Folien in der definierten Schichtfolge und darauffolgendem Verpressen unter Anwendung von Temperatur und Druck zusammengefügt. Die dafür zu verwendenden Folien müssen in entsprechender Schichtstärke vorher, beispielsweise durch Extrusion, hergestellt werden.

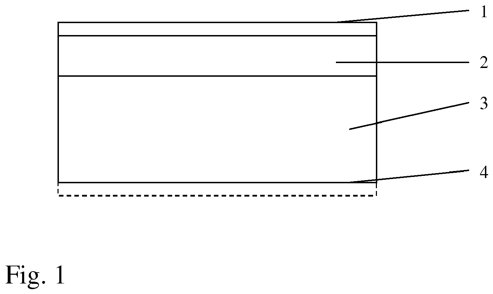

Die derart hergestellten Mehrschichtverbunde werden auch als Halbzeuge bezeichnet. Das bevorzugte Herstellungsverfahren ist die Coextrusion. Mehrschichtige Verbundkörper gemäß der Erfindung sind in der Fig. 1 erläutert, in der die Deckschicht (1), die Zwischenschicht (2), die Substratschicht (3) und die optionale vierte Schicht (4) dargestellt sind. Da die vierte Schicht (4) optional vorgesehen ist, wurde diese strichliert dargestellt.

### Verarbeitung der Halbzeuge

Bauteile aus Mehrschichtverbunden, wie sie oben und auch in den beiliegenden Ansprüchen definiert sind, können aus den flächigen Halbzeugen durch thermisches Verformen (Thermoformen) erzeugt werden. Dabei werden die Mehrschichtverbunde in einer Tiefziehmaschine über den Erweichungspunkt erhitzt und unmittelbar darauffolgend über eine temperierte Form gezogen. Durch Anlegen von Vakuum in den Luftraum, der sich zwischen thermoplastischem Halbzeug und der temperierten Form befindet, wird das Halbzeug an die Form gepresst, abgekühlt und anschließend entformt. Im Anschluss wird der Formrohling auf das richtige Maß besäumt, wodurch man einen dreidimensionalen Bauteil mit einer definierten, sehr gut reproduzierbaren Geometrie erhält.

### Anforderungen an die Bauteile

Temperaturen in einer Größenordnung, welche Bauteile aus dem Stand der Technik zum Versagen bringen, und deutlich darüber, treten zum Beispiel an horizontalen, flächigen Bauteilen auf, welche dunkel eingefärbt sind (beispielsweise an KFZ-Karosserien). So ergaben Untersuchungen, bei denen unter mitteleuropäischen Wetterbedingungen besagte Bauteile unter kontinuierlicher Aufzeichnung der Oberflächentemperatur exponiert wurden, dass an heißen Sommertagen Temperaturspitzen von mehr als 90° C erreicht werden. Das Versagen von thermogeformten Teilen äußert sich in allen Fällen durch Veränderung der ursprünglichen geometrischen Form, wodurch diese gebrauchsuntauglich werden. Weiters ist aus der Praxis bekannt, dass Bauteile auf Basis eines PMMA-ABS-Coextrudats bei Dauergebrauch über 80° C, auf Basis PMMA-ABS/PC-Blend bei ca. 90° C ihre geometrische Form verlieren. An Aufbauten, wie sie in der DE 197 25 560 A1 beschrieben sind (PMMA-PMMA-ASA/PC und PMMA-PC-ASA/PC), tritt die Deformation zwischen 85 und 90° C auf, PMMA-PMMA-PC bzw. PMMA-PMMA-PC/PMMA gemäß der DE 103 51 535 A1 (RÖHM) versagen bei 100° C. Nachdem Bauteile aus besagten Aufbauten aber auch in mediterranen Klimazonen mit deutlich höheren Temperaturen als in Mitteleuropa Einsatz finden, sind die Anforderungen in diese Richtung auch deutlich erhöht: Es herrscht Bedarf an Bauteilen aus Materialien mit Wärmestandfestigkeiten über 110° C über mehrere Stunden hinweg.

Der Mechanismus des Versagens basiert dabei auf der Tatsache, dass der Bauteil mit steigender Temperatur an Steifigkeit verliert, plastisch wird und sich aufgrund des eigenen Gewichtes deformiert.

Um die Temperatureinflüsse an Bauteilen unterschiedlicher Mehrschichtaufbauten zu simulieren und die Auswirkungen der Temperatur auf die geometrische Form zu bewerten, wurde eine eigene Untersuchungsmethode entwickelt. Diese beruht darauf, dass man Bauteile mittels einer Tiefziehform darstellt, wobei die Geometrie einem Automobildach ähnlich ist. Dieser Bauteil wird in Folge geometrisch vermessen und bei definierten Temperaturen in einem Wärmeschrank über zwei Stunden gelagert. Im Anschluss wird der Teil entnommen, eine weitere Stunde bei Raumtemperatur klimatisiert und danach erneut die Geometrie bestimmt. Wird dabei eine Geometrieänderung festgestellt, so kann man davon ausgehen, dass der Bauteil die Anforderung der Temperatur aus der Wärmelagerung nicht besteht.

Eine Möglichkeit, die Wärmestandfestigkeit von Bauteilen zu erhöhen, ist die Verstärkung dieser mit faserverstärkten Duroplasten an der Rückseite. Das zusätzliche Aufbringen von faserverstärkten Duroplasten als Verstärkung bringt zwar eine Verbesserung in der Wärmestandfestigkeit, führt aber auch zu deutlich erhöhten Kosten, da für das Aufbringen der Verstärkungsschicht noch einerseits zusätzliche Prozessschritte als auch Materialmengen erforderlich sind.

Die Erfindung geht daher aus kommerziellen Gründen nicht von duroplastverstärkten Bauteilen aus, sondern von Mehrschichtverbunden, wie sie in der EP 1 761 382 B1 (Sabic), DE 103 51 535 A1 (RÖHM), DE 197 25 560 A1 (BASF) beschrieben sind. Es wurden daher aus Aufbauten, wie sie in diesen Schriften beschrieben sind, Versuchsbauteile dargestellt und mittels der Warmlagerprüfung bei 110° C untersucht. Die Resultate sind in Tabelle 1 zusammengefasst.

**Tabelle 1: Resultate der Wärmelagerung bei 110° C / 2h an Bauteilen unterschiedlicher Mehrschichtaufbauten (bei V1-V5 handelt es sich um Vergleichsbeispiele, Schicht 3 von V5 besteht zu 60 Gew. % aus PC (Polycarbonat) und zu 40 Gew. % aus ASA; A6 ist ein erfindungsgemäßes Beispiel).**

| | Schichtaufbau | | | Geometrie nach Wärmelagerung bei 110° C / 2h |
|---|---|---|---|---|
| | (1) | (2) | (3) | |
| V1 | PMMA | PMMA | ABS | Vollständiger Verlust der geometrischen Form |
| V2 | PMMA | PMMA | ABS/ PC | Vollständiger Verlust der geometrischen Form |
| V3 | PMMA | PMMA | ASA/ PC | Vollständiger Verlust der geometrischen Form |
| V4 | PMMA | PMMA | PC | Unakzeptable Verwölbungen erkennbar |
| V5 | PMMA | PC | ASA/ PC | Vollständiger Verlust der geometrischen Form |
| A6 | PMMA | PC | PC | Keine Veränderung der geometrischen Form |

Um die Einflussfaktoren des Versagens der Bauteile zu bestimmen, wurden die thermischen Kennwerte in Tabelle 2 zusammengefasst:

**Tabelle 2: Thermische Kennwerte der Werkstoffe aus unterschiedlichen Aufbauten (bei V1-V5 handelt es sich um Vergleichsbeispiele, A6 ist ein erfindungsgemäßes Beispiel).**

| | Schichtaufbau | | | E- Modul 100° C [MPa] | | | T_{G}[°C] | | | E-Modul* |
|---|---|---|---|---|---|---|---|---|---|---|
| | (1) | (2) | (3) | (1) | (2) | (3) | (1) | (2) | (3) | |
| V1 | PMMA | PMMA | ABS | 780 | 780 | 850 | 109 | 109 | 110 | 830 |
| V2 | PMMA | PMMA | ABS/ PC | 780 | 780 | 1340 | 109 | 109 | 111/147 | 1100 |
| V3 | PMMA | PMMA | ASA/ PC | 780 | 950 | 1160 | 114 | 109 | 115/145 | 1000 |
| V4 | PMMA | PMMA | PC | 960 | 960 | 1900 | 107 | 107 | 148 | 1850 |
| V5 | PMMA | PC | ASA/ PC | 780 | 1900 | 1160 | 114 | 148 | 115/145 | 1150 |
| A6 | PMMA | PC | PC | 780 | 1900 | 1900 | 114 | 148 | 153 | 1900 |

| | | | | | | | | | | |
|---|---|---|---|---|---|---|---|---|---|---|
| * E-Modul des Gesamtverbunds bei 100° C | | | | | | | | | | |

Die Bestimmung des E-Moduls bei 100° C erfolgte gemäß der ISO 527-2, wobei die Zugprüfung in einer beheizbaren Kammer erfolgt. Die Bestimmung der Glasübergangs- oder Erweichungstemperatur (T_{G}) wurde gemessen mittels eines DSC-Messgerätes (Differential Scanning Calorimetry) nach ISO 11357-2:1999 und ist charakterisiert durch die "midpoint temperature". Diese ist die Temperatur, bei der ein Kunststoff die größte Änderung der Verformungsfähigkeit aufweist. Dieser sogenannte Glasübergang trennt den unterhalb liegenden spröden energieelastischen Bereich (= Glasbereich) vom oberhalb liegenden weichen entropieelastischen Bereich (= gummielastischer Bereich).

Wie aus den Resultaten der Tabellen 1 und 2 überraschend festgestellt werden konnte, ist es, um die Anforderungen einer geometrischen Formstabilität bei Einwirkung von Temperaturen von 110° C über mehrere Stunden hinweg zu erhalten, erforderlich, die Deckschicht aus PMMA in einem Stärkenbereich zwischen 5 und 50 µm zu halten und den verwendeten Werkstoff für die darunterliegenden Schichten (2) und (3) so zu wählen, dass eine Differenztemperatur im Glasübergangspunkt von mindestens 30° C, gemessen mittels DSC-Methode nach ISO 11357-2 (Ausgabestand 1999-3) festgestellt werden kann. Um die in der Anwendung der Bauteile aus dem erfindungsgemäßen Halbzeug geforderten Effekteinfärbungen zu ermöglichen, ist weiters eine Transmission im sichtbarem Lichtbereich von mindestens 85 %, gemessen an farblosen Probekörpern nach ISO 13468-2 bei einer Schichtstärke von 3 mm, erforderlich. Beim Vergleichsbeispiel V5 sieht man, dass ein ASA/PC-Blend mit 60 Gew. % PC, wobei das PC einen um 30° C höheren Glasübergangspunkt als das PMMA der Deckschicht hatte, die Anforderungen nicht erfüllt. Erst bei wenigstens 85 Gew. % an Thermoplasten in der Substratschicht mit einem um 30° C höheren T_{G} werden die gewünschten Ergebnisse erzielt.

## Patentansprüche

1. Mehrschichtiger Verbundkörper, umfassend in dieser Reihenfolge
(i) eine Deckschicht (1) mit einer Schichtstärke von 5 - 50 µm, umfassend PMMA, impact-modifiziertes PMMA (HI-PMMA) oder einen Blend davon,
(ii) eine unterhalb der Deckschicht (1) angeordnete Zwischenschicht (2), umfassend Polycarbonat (PC), welches bei einer Schichtstärke von 3 mm im gesamten Wellenlängenbereich von 380 nm bis 780 nm eine spektrale Transmission von mindestens 80 %, gemessen an Probekörpern nach ISO 13468-2 (Ausgabenstand 1999) zeigt und welches gegenüber dem PMMA, impact-modifizierten PMMA (HI-PMMA) oder Blend davon der Deckschicht (1) eine um wenigstens 30° C höhere Glasübergangstemperatur, definiert durch die jeweilige "midpoint temperature", gemessen mittels DSC- Methode nach ISO 11357-2 (Ausgabestand 1999-3), aufweist,
(iii) eine Substratschicht (3), umfassend mindestens 85 Gew. % Polycarbonat (PC), welches gegenüber dem PMMA, impact-modifizierten PMMA (HI-PMMA) oder Blend davon aus der Deckschicht (1) eine um wenigstens 30° C höhere Glasübergangstemperatur, definiert durch die jeweilige "midpoint temperature", gemessen mittels DSC- Methode nach ISO 11357-2 (Ausgabestand 1999-3), aufweist, enthaltend Pigmente, Farbstoffe und gegebenenfalls Effektpigmente,
(iv) optional eine vierte Schicht (4), umfassend einen thermoplastischen Werkstoff, wie in der Zwischenschicht (2) oder der Substratschicht (3) beschrieben, oder einen Blend von Acrylnitril-Butadien-Styrolcopolymer (ABS) mit einem thermoplastischen Werkstoff, wie in der Zwischenschicht (2) oder der Substratschicht (3) beschrieben,
mit der Maßgabe, dass die Gesamtdicke des Verbundkörpers größer als 1,0 mm ist.

2. Verbundkörper nach Anspruch 1, **dadurch gekennzeichnet, dass** das PC der Substratschicht (3) im Wesentlichen identisch ist zum PC der Zwischenschicht (2).

3. Verbundkörper nach Anspruch 1 oder Anspruch 2, **dadurch gekennzeichnet, dass** die Zwischenschicht (2) Pigmente, Farbstoffe und/oder Effektpigmente enthält.

4. Verbundkörper nach einem der Ansprüche 1 bis 3, **dadurch gekennzeichnet, dass** die Zwischenschicht (2) UV-Absorber und/oder UV-Stabilisatoren enthält.

5. Verbundkörper nach einem der Ansprüche 1 bis 4, **dadurch gekennzeichnet, dass** die Zwischenschicht (2) zumindest 85 Gew. %, vorzugsweise mindestens 90 Gew. %, besonders bevorzugt zumindest 95 Gew. % an PC enthält, welches bei einer Schichtstärke von 3 mm im gesamten Wellenlängenbereich von 380 nm bis 780 nm eine spektrale Transmission von mindestens 80 %, gemessen and Probekörpern nach ISO 13468-2 (Ausgabenstand 1999) zeigt und welches gegenüber dem PMMA, impact-modifizierten PMMA (HI-PMMA) oder Blend davon der Deckschicht (1) eine Differenztemperatur im Glasübergangspunkt definiert durch die jeweilige "midpoint temperature" von mehr als 30° C, gemessen mittels DSC-Methode nach ISO 11357-2 (Ausgabestand 1999-3) aufweist.

6. Verbundkörper nach einem der Ansprüche 1 bis 5, **dadurch gekennzeichnet, dass** die Deckschicht (1) PMMA, impact-modifiziertes PMMA (HI-PMMA) oder einen Blend davon als Hauptkomponente(n) umfasst.

7. Verbundkörper nach einem der Ansprüche 1 bis 6, **dadurch gekennzeichnet, dass** die Deckschicht (1) UV-Absorber und/oder UV-Stabilisatoren aufweist.

8. Verbundkörper nach einem der Ansprüche 1 bis 7, **dadurch gekennzeichnet, dass** die Deckschicht (1) ausschließlich aus PMMA, HI-PMMA und gegebenenfalls UV-Absorbern und/oder UV-Stabilisatoren besteht.

9. Verbundkörper nach einem der Ansprüche 1 bis 8, **dadurch gekennzeichnet, dass** das PMMA, impact-modifizierte PMMA (HI-PMMA) oder der Blend davon der Deckschicht (1) als Prüfkörper bei einer Schichtstärke von 3 mm im gesamten Wellenlängebereich von 380 nm bis 780 nm eine spektrale Transmission von mindestens 80 %, vorzugsweise von mindestens 85 %, besonders bevorzugt von mindestens 90 %, nach ISO 13468-2 aufweist.

10. Verbundkörper nach einem der Ansprüche 1 bis 9, **dadurch gekennzeichnet, dass** die Substratschicht zumindest 90 Gew.%, besonders bevorzugt zumindest 95 Gew.%, an PC enthält, welches gegenüber dem PMMA, impact-modifizierten PMMA (HI-PMMA) oder Blend davon der Deckschicht (1) eine um wenigstens 30° C höhere Glasübergangstemperatur, definiert durch die jeweilige "midpoint temperature", gemessen mittels DSC-Methode nach ISO 11357-2 (Ausgabestand 1999-3), aufweist.

11. Verbundkörper nach einem der Ansprüche 1 bis 10, **dadurch gekennzeichnet, dass** dieser dreidimensional formbar, vorzugsweise thermoformbar, ist.

12. Dreidimensionaler geformter Körper, umfassend einen Verbundkörper nach einem der Ansprüche 1 bis 11.

13. Verfahren zur Herstellung eines mehrschichtigen Verbundkörpers nach einem der Ansprüche 1 bis 11, **dadurch gekennzeichnet, dass** die Werkstoffe der Deckschicht (1), Zwischenschicht (2), Substratschicht (3) und gegebenenfalls Schicht (4) in jeweils einem Extruder durch thermische Einwirkung fließfähig gemacht werden und in einem Adaptersystem oder einer Mehrkanaldüse zusammengeführt werden, wobei allfällige Zusatzstoffe der jeweiligen Schicht in den jeweiligen Extruder während der thermischen Einwirkung eingebracht werden.

14. Verfahren zur Herstellung eines mehrschichtigen Verbundkörpers nach einem der Ansprüche 1 bis 11, **dadurch gekennzeichnet, dass** die Werkstoffe der Deckschicht (1), Zwischenschicht (2), Substratschicht (3) und gegebenenfalls Schicht (4) gegeneinander, vorzugsweise in einem Walzenspalt unter Temperatur- und Druckeinwirkung gegeneinander kaschiert werden.

15. Verwendung eines mehrschichtigen Verbundkörpers gemäß einem der Ansprüche 1 bis 11 oder eines dreidimensionalen geformten Körpers nach Anspruch 12 als Fahrzeugkarosserie, als Möbelteil, als Transportkofferschale oder als Transportbehälter.

## Claims

1. A multi-layered composite body, comprising in this order
(i) a cover layer (1) having a layer thickness of 5 - 50 µm, comprising PMMA, impact-modified PMMA (HI-PMMA) or a blend thereof,
(ii) an intermediate layer (2) that is arranged underneath the cover layer (1), comprising polycarbonate (PC), which at a layer thickness of 3 mm shows in the entire wave length range of 380 nm to 780 nm a spectral transmission of at least 80 %, measured by way of test bodies according to ISO 13468-2 (edition 1999) and which has in regard to the PMMA, impact-modified PMMA (HI-PMMA) or blend thereof of the cover layer (1) a glass transition temperature that is at least 30°C higher, defined by the respective "midpoint temperature", measured by way of DSC method according to ISO 11357-2 (edition 1999-3), ,
(iii) a substrate layer (3), comprising at least 85 % per weight of polycarbonate (PC), which has in regard to the PMMA, impact-modified PMMA (HI-PMMA) or blend thereof of the cover layer (1) a glass transition temperature that is at least 30° C higher, defined by the respective "midpoint temperature", measured by way of DSC method according to ISO 11357-2 (edition 1999-3), containing pigments, dyes and optionally effect pigments,
(iv) optionally a fourth layer (4), comprising a thermoplastic material, as described in the intermediate layer (2) or in the substrate layer (3), or a blend of acrylonitrile-butadiene-styrene co-polymer (ABS) with a thermoplastic material, as described in the intermediate layer (2) or in the substrate layer (3),
providing that the overall thickness of the composite body is more than 1.00 mm.

2. A composite body according to claim 1, **characterized in that** the PC of the substrate layer (3) is essentially identical with the PC of the intermediate layer (2).

3. A composite body according to claim 1 or claim 2, **characterized in that** the intermediate layer (2) contains pigments, dyes and/or effect pigments.

4. A composite body according to any of claims 1 to 3, **characterized in that** the intermediate layer (2) contains UV absorbers and/or UV stabilizers.

5. A composite body according to any of claims 1 to 4, **characterized in that** the intermediate layer (2) contains at least 85 % per weight, preferably at least 90 % per weight, especially preferably at least 95 % per weight of PC, which at a layer thickness of 3 mm has in the entire wave length range of 380 nm to 780 nm a spectral transmission of at least 80%, measured by way of test bodies according to ISO 13468-2 (edition 1999) and which has in regard to the PMMA, impact-modified PMMA (HI-PMMA) or blend thereof of the cover layer (1) a differential temperature in the glass transition point, defined by the respective "midpoint temperature", of more than 30° C, measured by way of DSC method according to ISO 11357-2 (edition 1999-3).

6. A composite body according to any of claims 1 to 5, **characterized in that** the cover layer (1) comprises PMMA, impact-modified PMMA (HI-PMMA) or blend thereof as main component(s).

7. A composite body according to any of claims 1 to 6, **characterized in that** the cover layer (1) has UV absorbers and/or UV stabilizers.

8. A composite body according to any of claims 1 to 7, **characterized in that** the cover layer (1) consists exclusively of PMMA, HI-PMMA and optionally UV absorbers and/or UV stabilizers.

9. A composite body according to any of claims 1 to 8, **characterized in that** the PMMA, impact-modified PMMA (HI-PMMA) or blend thereof of the cover layer (1) as a test body at a layer thickness of 3 mm has in the entire wave length range of 380 nm to 780 nm a spectral transmission of at least 80%, preferably of at least 85%, especially preferably of at least 90%, according to ISO 13468-2.

10. A composite body according to any of claims 1 to 9, **characterized in that** the substrate layer contains at least 90 % per weight, especially preferably at least 95 % per weight of PC, which has in regard to the PMMA, impact-modified PMMA (HI-PMMA) or blend thereof of the cover layer (1) a glass transition temperature that is at least 30° C higher, defined by the respective "midpoint temperature", measured by way of DSC method according to ISO 11357-2 (edition 1999-3).

11. A composite body according to any of claims 1 to 10, **characterized in that** it may be three-dimensionally moulded, preferably thermoformably.

12. A three-dimensionally moulded body, comprising a composite body according to any of claims 1 to 11.

13. A method for the production of a multi-layered composite body according to any of claims 1 to 11, **characterized in that** the materials of the cover layer (1), the intermediate layer (2), the substrate layer (3) and optionally the layer (4) are made flowable in respectively one extruder by thermal impact and combined in an adapter system or in a multi-channel nozzle, wherein any additional substances of the respective layer are introduced into the respective extruder during the thermal impact.

14. A method for the production of a multi-layered composite body according to any of claims 1 to 11, **characterized in that** the materials of the cover layer (1), the intermediate layer (2), the substrate layer (3) and optionally the layer (4) are laminated against each other, preferably in a roller gap under the impact of temperature and pressure.

15. The use of a multi-layered composite body according to any of claims 1 to 11 or of a three-dimensionally moulded body according to claim 12 as vehicle body, as furniture element, as transport trolley case, as transport container or the like.

## Revendications

1. Corps composite multicouche, comprenant dans cet ordre
(i) une couche de couverture (1) d'une épaisseur de 5 à 50 µm, contentant du PMMA, du PMMA à impact modifié (HI-PMMA) ou un mélange de ceux-ci,
(ii) une couche intermédiaire (2) disposée au-dessous de la couche de couverture (1), contenant du polycarbonate (PC) qui, lors d'une épaisseur de 3 mm dans l'ensemble de la plage de longueurs d'ondes de 380 nm à 780 nm, présente une transmission spectrale d'au moins 80 % mesurée sur des éprouvettes selon la norme ISO 13468-2 (édition 1999) et qui, par rapport au PMMA, au PMMA à impact modifié (HI-PMMA) ou au mélange de la couche de couverture (1), présente une température de transition vitreuse, définie par la température respective dite "midpoint temperature", mesurée au moyen de la méthode DSC selon la norme ISO 11357-2 (édition 1999-3), qui est plus élevée d'au moins 30 °C,
(iii) une couche formant substrat (3), comprenant au moins 85 % en poids de polycarbonate (PC) qui, par rapport au PMMA, au PMMA à impact modifié (HI-PMMA) ou au mélange de la couche de couverture (1), présente une température de transition vitreuse, définie par la température respective "midpoint temperature", mesurée au moyen de la méthode DSC selon la norme ISO 11357-2 (édition 1999-3), qui est plus élevée d'au moins 30 °C, contenant des pigments, des colorants et le cas échéant des pigments à effet,
(iv) optionnellement une quatrième couche (4), contenant un matériau thermoplastique, tel que décrit dans la couche intermédiaire (2) ou dans la couche formant substrat, ou un mélange de copolymère d'acrylonitrile butadiène styrène (ABS) avec un matériau thermoplastique tel que décrit dans la couche intermédiaire (2) ou dans la couche formant substrat (3),
à condition que l'épaisseur totale du corps composite soit supérieure à 1,0 mm.

2. Corps composite selon la revendication 1, **caractérisé en ce que** le PC de la couche formant substrat (3) est sensiblement identique au PC de la couche intermédiaire (2).

3. Corps composite selon la revendication 1 ou selon la revendication 2, **caractérisé en ce que** la couche intermédiaire (2) contient des pigments, des colorants et/ou des pigments à effet.

4. Corps composite selon l'une des revendications 1 à 3, **caractérisé en ce que** la couche intermédiaire (2) contient un absorbeur UV et/ou des stabilisateurs UV.

5. Corps composite selon l'une des revendications 1 à 4, **caractérisé en ce que** la couche intermédiaire (2) contient au moins 85 % en poids, de préférence au moins 90 % en poids, de préférence particulière au moins 95 % en poids de PC qui, lors d'une épaisseur de 3 mm dans l'ensemble de la plage de longueurs d'ondes de 380 nm à 780 nm, présente une transmission spectrale d'au moins 80 %, mesurée sur des éprouvettes selon la norme ISO 13468-2 (édition 1999) et qui, par rapport au PMMA, au PMMA à impact modifié (HI-PMMA) ou au mélange de la couche de couverture (1), présente une température différentielle au point de transition vitreuse, définie par la température respective "midpoint temperature", mesurée au moyen de la méthode DSC selon la norme ISO 11357-2 (édition 1999-3), qui est supérieure à 30 °C.

6. Corps composite selon l'une des revendications 1 à 5, **caractérisé en ce que** la couche de couverture (1) contient à titre de composante(s) principale(s) du PMMA, du PMMA à impact modifié (HI-PMMA) ou un mélange.

7. Corps composite selon l'une des revendications 1 à 6, **caractérisé en ce que** la couche de couverture (1) contient un absorbeur UV et/ou des stabilisateurs UV.

8. Corps composite selon l'une des revendications 1 à 7, **caractérisé en ce que** la couche de couverture (1) est constituée exclusivement en PMMA, HI-PMMA et le cas échéant en absorbeurs UV et/ou en stabilisateurs UV.

9. Corps composite selon l'une des revendications 1 à 8, **caractérisé en ce que** le PMMA, le PMMA à impact modifié (HI-PMMA) ou le mélange de la couche de couverture (1) présente en tant qu'éprouvette avec une épaisseur de couche de 3 mm dans l'ensemble de la plage de longueurs d'ondes de 380 nm à 780 nm, une transmission spectrale d'au moins 80 %, de préférence d'au moins 85 %, de préférence particulière d'au moins 90 %, selon la norme ISO 13468-2.

10. Corps composite selon l'une des revendications 1 à 9, **caractérisé en ce que** la couche de substrat contient au moins 90 % en poids, de préférence au moins 95 % en poids de PC qui, par rapport au PMMA, au PMMA à impact modifié (HI-PMMA) ou au mélange de la couche de couverture (1), présente une température de transition vitreuse, définie par la température respective "midpoint température", mesurée au moyen de la méthode DSC selon la norme ISO 11357-2 (édition 1999-3), qui est plus élevée d'au moins 30 °C.

11. Corps composite selon l'une des revendications 1 à 10, **caractérisé en ce que** celui-ci est déformable, de préférence thermodéformable, sur trois dimensions.

12. Corps moulé tridimensionnel, comprenant un corps composite selon l'une des revendications 1 à 11.

13. Procédé de réalisation d'un corps composite multicouche selon l'une des revendications 1 à 11, **caractérisé en ce que** les matériaux de la couche de couverture (1), de la couche intermédiaire (2), de la couche formant substrat (3) et le cas échéant de la couche (4) sont rendus fluides dans une extrudeuse respective par influence thermique et ils sont réunis dans un système adaptateur ou dans une buse multicanal, et des additifs éventuels étant ajoutés à la couche respective dans l'extrudeuse respective pendant l'influence thermique.

14. Procédé de réalisation d'un corps composite multicouche selon l'une des revendications 1 à 11, **caractérisé en ce que** les matériaux de la couche de couverture (1), de la couche intermédiaire (2), de la couche formant substrat (3) et le cas échéant de la couche (4) sont laminées les unes par rapport aux autres, de préférence dans une emprise par action de température et de pression.

15. Utilisation d'un corps composite multicouche selon l'une des revendications 1 à 11 ou d'un corps moulé tridimensionnel selon la revendication 12 en tant que carrosserie de véhicule, de meuble, de coque de mallette de transport ou de conteneur de transport.
